# FASCICULE DE BREVET EUROPEEN

(11) **EP 3 484 729 B1**
(45) Date de publication et mention de la délivrance du brevet: **02.09.2020**
(21) Numéro de dépôt: 17748536.4
(22) Date de dépôt: 11.07.2017
(51) Int. Cl.: B60C 15/06, B60C 15/00

(54) **PNEUMATIQUE DONT LA ZONE DU BOURRELET EST ALLÉGÉE**
REIFEN MIT WULSTBEREICH MIT REDUZIERTEM GEWICHT
TYRE WITH A REDUCED-WEIGHT BEAD REGION

(30) Priorité: 13.07.2016 FR 1656721
(43) Date de publication de la demande: 22.05.2019
(73) Titulaire: Compagnie Générale des Etablissements Michelin, 63000 Clermont-Ferrand (FR)
(72) Inventeur: LICENSE, William, 63040 Clermont-Ferrand Cedex 9 (FR); JOULIN, Emmanuel, 63040 Clermont-Ferrand Cedex 9 (FR)
(74) Mandataire: Le Cam, Stéphane Georges Elie
(86) Numéro de dépôt international: PCT/FR2017/051898
(87) Numéro de publication internationale: WO 2018/011515

(56) Documents cités:
- EP-A1- 0 924 108
- WO-A1-2011/057889
- WO-A1-2013/150024
- WO-A2-00/38938

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

En ce qui concerne les fils ou câbles métalliques, les mesures de force à la rupture (charge maximale en N), de résistance à la rupture (en MPa), d'allongement à la rupture (allongement total en %) et de module (en GPa) sont effectuées en traction selon la norme ISO 6892 de 1984.

En ce qui concerne les compositions de caoutchouc, les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979).

De tels pneumatiques comportent encore usuellement au niveau des bourrelets une ou plusieurs couches d'éléments de renforcement appelés raidisseurs. Ces couches sont le plus souvent constituées d'éléments de renforcement orientés par rapport à la direction circonférentielle d'un angle inférieur à 45°, et le plus souvent inférieur à 25°. Ces couches d'éléments de renforcements ont notamment pour fonction de limiter les déplacements longitudinaux des matériaux constitutifs du bourrelet par rapport à la jante de la roue pour limiter une usure prématurée dudit bourrelet. Elles permettent également de limiter la déformation permanente du bourrelet sur le crochet de jante, due au phénomène de fluage dynamique des matériaux élastomériques. Cette déformation du bourrelet peut empêcher le rechapage des pneumatiques lorsqu'elle est excessive. Elles contribuent encore à la protection des zones basses du pneumatique contre les agressions subies lors du montage et du démontage des pneumatiques sur les jantes.

Par ailleurs, dans le cas d'ancrage de l'armature de carcasse réalisé autour d'une tringle, qui consiste à enrouler au moins en partie l'armature de carcasse autour d'une tringle dans chacun des bourrelets en formant un retournement s'étendant plus ou moins haut dans le flanc, les couches d'éléments de renforcement ou raidisseur permettent encore d'éviter ou de retarder le déroulement de l'armature de carcasse lors d'échauffements accidentels et excessifs de la jante.

Ces couches d'éléments de renforcement ou raidisseurs sont le plus souvent disposées axialement à l'extérieur du retournement de l'armature de carcasse et s'étendent sur une hauteur dans le flanc supérieure à celle du retournement notamment pour couvrir les extrémités libres des éléments de renforcement dudit retournement.

De telles conceptions de pneumatiques sont par exemples décrites dans les documents FR 2779387 ou US 2006/0000199.

La présence de ces couches d'éléments de renforcement ou raidisseurs complexifient la conception de ces zones des bourrelets du pneumatique. La présence d'une couche supplémentaire d'une part et son agencement par rapport notamment au retournement de l'armature de carcasse et à la tringle d'autre part conduisent à une conception nécessitant des mélanges caoutchouteux pour séparer les extrémités de couches et assurer le positionnement souhaité des différentes extrémités.

Par ailleurs, le document WO 2011/057889 décrit un pneumatique comportant une couche d'armature de carcasse retourné autour d'une tringle pour former un retournement, ledit retournement étant séparé de la partie principale de la couche d'armature de carcasse par la superposition radiale de deux couches de mélanges caoutchouteux présentant des rigidités différentes.

Les inventeurs se sont ainsi donnés pour mission de fournir des pneumatiques pour véhicules "Poids-Lourds", dont les performances d'endurance notamment l'endurance des zones des bourrelets sont conservées et dont la conception est simplifiée et avantageusement dont la masse globale du pneumatique est diminuée.

Ce but a été atteint selon l'invention par un pneumatique destiné à être monté sur une jante creuse (15° drop centre), comprenant une armature de carcasse radiale, constituée d'une unique couche d'armature de carcasse formée d'éléments de renforcement insérés entre deux couches de calandrage de mélange polymérique, ledit pneumatique comprenant une armature de sommet, elle-même coiffée radialement d'une bande de roulement, ladite bande de roulement étant réunie à deux bourrelets par l'intermédiaire de deux flancs, la couche d'éléments de renforcement de l'armature de carcasse étant ancrée dans chacun des bourrelets par retournement autour d'une tringle pour former une partie principale de la couche d'armature de carcasse s'étendant d'une tringle à l'autre et un retournement de la couche d'armature de carcasse dans chacun des bourrelets, ledit retournement de la couche d'armature de carcasse étant séparé de la partie principale de la couche d'armature de carcasse par une première couche de mélange polymérique s'étendant radialement depuis la tringle jusqu'au moins l'extrémité du retournement de la couche d'armature de carcasse et ledit retournement de la couche d'armature de carcasse étant axialement vers l'extérieur au contact d'une deuxième couche de mélange polymérique, elle-même au moins au contact d'une troisième couche de mélange polymérique formant la surface extérieur du pneumatique dans la zone du bourrelet, ladite troisième couche de mélange polymérique étant destinée notamment à venir au contact de la jante, ladite troisième couche de mélange polymérique étant radialement vers l'extérieur au contact d'une quatrième couche formant la surface extérieure d'un flanc et, dans une coupe méridienne dudit pneumatique,
- l'extrémité radialement extérieure de la première couche de mélange polymérique étant radialement extérieure à l'extrémité du retournement de la couche d'armature de carcasse,
- l'extrémité radialement extérieure de la deuxième couche de mélange polymérique étant radialement extérieure à l'extrémité du retournement de la couche d'armature de carcasse,
- la distance entre l'extrémité du retournement de la couche d'armature de carcasse et le point radialement le plus intérieur du cercle circonscrit à la tringle étant comprise entre 25 et 40% de la distance entre le point axialement le plus extérieur de la partie principale de la couche d'armature de carcasse et le point radialement le plus intérieur du cercle circonscrit à la tringle,
- ladite première couche de mélange polymérique présentant une épaisseur, mesurée selon la direction normale aux éléments de renforcement de la partie principale de la couche d'armature de carcasse et passant par l'extrémité du retournement de la couche d'armature de carcasse comprise entre 30 et 60% de la distance entre les éléments de renforcements de la partie principale de la couche d'armature de carcasse et la surface extérieure du pneumatique mesurée selon la direction de mesure de l'épaisseur de la première couche de mélange polymérique passant par l'extrémité du retournement de la couche d'armature de carcasse,
- le rapport de la distance entre les éléments de renforcements de la partie principale de la couche d'armature de carcasse et la surface extérieure du pneumatique mesurée selon ladite direction de mesure de l'épaisseur de la première couche de mélange polymérique passant par l'extrémité du retournement de la couche d'armature de carcasse sur la distance entre l'extrémité du retournement de la couche d'armature de carcasse et le point radialement le plus intérieur du cercle circonscrit à la tringle étant inférieur à 0.5,
- le retournement de la couche d'armature de carcasse et la partie principale de la couche d'armature de carcasse étant les seules couches d'éléments de renforcement dont l'allongement à rupture est inférieur à 6 % présentes dans une zone du flanc constituant au moins 90% de la surface comprise radialement entre l'extrémité du retournement de la couche d'armature de carcasse et le point radialement le plus à l'extérieur de la tringle,
- la première et la deuxième couche de mélange polymérique comportant une charge renforçante constituée par au moins une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse,
- les modules d'élasticité sous tension à 10 % d'allongement de la première et de la deuxième couche de mélange polymérique étant inférieurs au module d'élasticité sous tension à 10 % d'allongement du calandrage de la couche d'armature de carcasse et supérieurs ou égaux à 30% du module d'élasticité sous tension à 10 % d'allongement du calandrage de la couche d'armature de carcasse.

Au sens de l'invention, une jante creuse (15° drop center) ou jante à seat coincé est une jante monobloc, telle que définie dans l'ETRTO, dont les sièges destinés à recevoir les bourrelets du pneumatique présentent une forme tronconique, l'angle formé avec la direction axiale étant sensiblement équivalant à 15°. Ces sièges sont par ailleurs prolongés par des crochets de jante de hauteur réduite par rapport à des crochets de jantes à bases plates dont les sièges de jante présentent des formes sensiblement cylindriques.

La position du point axialement le plus extérieur de la partie principale de l'armature de carcasse est déterminée sur un pneumatique monté et gonflé selon les conditions nominales. Cette détermination peut être réalisée par exemple selon une technique de tomographie.

Les positions des points radialement le plus intérieur et radialement le plus extérieur du cercle circonscrit à la tringle peuvent également être déterminées selon une technique de tomographie ou bien sont déterminées sur une coupe d'un pneumatique, dont l'écartement des bourrelets est le même que lorsque le pneumatique est monté sur la jante de montage préconisée par l'ETRTO, celui-ci étant donc ni monté ni gonflé.

La distance entre le point axialement le plus extérieur de la partie principale de la couche d'armature de carcasse et le point radialement le plus intérieur du cercle circonscrit à la tringle est mesurée sur un pneumatique monté et gonflé selon les conditions nominales. Cette mesure peut être réalisée par exemple selon une technique de tomographie.

Les autres distances, notamment mesurées depuis le point radialement le plus intérieur du cercle circonscrit à la tringle, peuvent également être mesurées selon une technique de tomographie ou bien sont mesurées sur une coupe d'un pneumatique, dont l'écartement des bourrelets est le même que lorsque le pneumatique est monté sur la jante de montage préconisée par l'ETRTO, celui-ci étant donc ni monté ni gonflé.

Les essais ont montré que les pneumatiques ainsi réalisés selon l'invention et dont la masse est inférieure à celle de pneumatiques de conception plus usuelle, comportant par exemple des couches d'éléments de renforcement supplémentaires de type raidisseurs, présentent des performances en termes d'endurance, et notamment en termes d'endurance des zones des bourrelets, au moins aussi bonnes que celles desdits pneumatiques de conception plus usuelle, voire supérieures.

Ces résultats sont d'autant plus surprenants que les conceptions plus usuelles de ce type de pneumatiques comportent un retournement de la couche d'armature de carcasse dont l'extrémité se trouve dans une zone du bourrelet relativement peu épaisse en comparaison de pneumatiques de conception plus usuelle. En effet, il est usuel de concevoir des pneumatiques avec un bourrelet relativement épais au niveau de l'extrémité du retournement de la couche d'armature de carcasse pour augmenter la distance entre le retournement de la couche d'armature de carcasse et la partie principale de la couche d'armature de carcasse, et ainsi limiter au mieux les contraintes de cisaillement qui s'initient entre la partie principale de la couche d'armature de carasse et son retournement notamment du fait des phénomènes de déradialisation qui apparaissent lors du roulage du pneumatique.

Les inventeurs ont ainsi su mettre en évidence que les pneumatiques réalisés conformément à l'invention et qui présentent notamment une extrémité du retournement de la couche d'armature carcasse dans une zone du bourrelet relativement peu épaisse associé aux dimensionnements et positionnement relatifs des différents éléments constitutifs de la zone du bourrelet du pneumatique, permettent d'alléger le pneumatique et contre toute attente de conserver des propriétés en termes d'endurance satisfaisantes, voire de les améliorer.

Selon un mode de réalisation préféré de l'invention, lesdites première et deuxième couches de mélange polymérique sont des mélanges élastomériques à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :
- soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse, de surface spécifique BET comprise entre 30 et 260 m²/g employée à un taux compris entre 20 et 80 pce, et de préférence entre 30 et 50 pce,
- soit par un coupage d'une charge blanche décrite en (a) et de noir de carbone, dans lequel le taux global de charge est compris entre 20 et 80 pce, et de préférence entre 40 et 60 pce, le taux de silice sur le taux global de charge étant supérieur à 80% et de préférence supérieur à 90 %.

La mesure de surface spécifique BET est effectuée selon la méthode de BRUNAUER, EMMET et TELLER décrite dans "The Journal of the American Chemical Society", vol. 60, page 309, février 1938, correspondant à la norme NFT 45007 de novembre 1987.

Dans le cas d'utilisation de charge claire ou charge blanche, il est nécessaire d'utiliser un agent de couplage et/ou de recouvrement choisi parmi les agents connus de l'homme de l'art. Comme exemples d'agents de couplage préférentiel, on peut citer les alcoxysilanes sulfurés du type polysulfure de bis-(3-trialcoxysilylpropyle), et parmi ceux-ci notamment le tétrasulfure de bis-(3-triéthoxysilylpropyle) commercialisé par la Société DEGUSSA sous les dénominations Si69 pour le produit liquide pur et X50S pour le produit solide (coupage 50/50 en poids avec du noir N330). Comme exemples d'agents de recouvrement on peut citer un alcool gras, un alkylalcoxysilane tel qu'un hexadécyltriméthoxy ou triéthoxysilane respectivement commercialisés par la Société DEGUSSA sous les dénominations Si116 et Si216, la diphénylguanidine, un polyéthylène glycol, une huile silicone éventuellement modifié au moyen des fonctions OH ou alcoxy. L'agent de recouvrement et/ou de couplage est utilisé dans un rapport pondéral par rapport à la charge ≥ à 1/100 et ≤ à 20/100, et préférentiellement compris entre 2/100 et 15/100 lorsque la charge claire représente la totalité de la charge renforçante et compris entre 1/100 et 20/100 lorsque la charge renforçante est constituée par un coupage de noir de carbone et de charge claire.

Comme autres exemples de charges renforçantes ayant la morphologie et les fonctions de surface SiOH et/ou AlOH des matières de type silice et/ou alumine précédemment décrites et pouvant être utilisées selon l'invention en remplacement partiel ou total de celles-ci, on peut citer les noirs de carbone modifiés soit au cours de la synthèse par addition à l'huile d'alimentation du four d'un composé du silicium et/ou d'aluminium soit après la synthèse en ajoutant, à une suspension aqueuse de noir de carbone dans une solution de silicate et/ou d'aluminate de sodium, un acide de façon à recouvrir au moins partiellement la surface du noir de carbone de fonctions SiOH et/ou AlOH. Comme exemples non limitatifs de ce type de charges carbonées avec en surface des fonctions SiOH et/ou AlOH, on peut citer les charges type CSDP décrites dans la Conférence N° 24 du Meeting ACS, Rubber Division, Anaheim, Californie, 6-9 mai 1997 ainsi que celles de la demande de brevet EP-A-0 799 854. Comme autres exemples non limitatifs, on peut citer les charges commercialisées par la société Cabot Corporation sous la dénomination EcoblackTM « CRX 2000 » ou « CRX4000 », ou bien encore les charges décrites dans les publications US2003040553, WO9813428 ; une telle charge renforçante contient préférentiellement un taux de silice de 10% en masse de la charge renforçante.

Lorsqu'une charge claire est utilisée comme seule charge renforçante, les propriétés d'hystérèse et de cohésion sont obtenues en utilisant une silice précipitée ou pyrogénée, ou bien une alumine précipitée ou bien encore un aluminosilicate de surface spécifique BET comprise entre 30 et 260 m²/g. Comme exemples non limitatifs de ce type de charge, on peut citer les silices KS404 de la Société Akzo, Ultrasil VN2 ou VN3 et BV3370GR de la Société Degussa, Zeopol 8745 de la Société Huber, Zeosil 175MP ou Zeosil 1165MP de la société Rhodia, HI-SIL 2000 de la Société PPG etc...

Parmi les élastomères diéniques pouvant être utilisés en coupage avec le caoutchouc naturel ou un polyisoprène synthétique à majorité d'enchaînements cis-1,4, on peut citer un polybutadiène (BR) de préférence à majorité d'enchaînements cis-1,4, un copolymère styrène-butadiène (SBR) solution ou émulsion, un copolymère butadiène-isoprène (BIR) ou bien encore un terpolymère styrène-butadiène-isoprène (SBIR). Ces élastomères peuvent être des élastomères modifiés en cours de polymérisation ou après polymérisation au moyen d'agents de ramification comme un divinylbenzène ou d'agents d'étoilage tels que des carbonates, des halogénoétains, des halogénosiliciums ou bien encore au moyen d'agents de fonctionnalisation conduisant à un greffage sur la chaîne ou en bout de chaîne de fonctions oxygénées carbonyle, carboxyle ou bien d'une fonction amine comme par exemple par action de la diméthyl ou de la diéthylamino benzophénone. Dans le cas de coupages de caoutchouc naturel ou de polyisoprène synthétique à majorité d'enchaînements cis-1,4 avec un ou plusieurs des élastomères diéniques, mentionnés ci-dessus, le caoutchouc naturel ou le polyisoprène synthétique est utilisé de préférence à un taux majoritaire et plus préférentiellement à un taux supérieur à 70 pce.

Lesdites première et deuxième couches de mélange polymérique ainsi constituées confèrent des rigidités supérieures aux conceptions plus usuelles qui permettent d'assurer aux zones des bourrelets des pneumatiques des rigidités de flexion satisfaisantes en association avec les épaisseurs de ces zones qui sont réduites par rapport à celles de pneumatiques plus usuels.

Lesdites première et deuxième couches de mélange polymérique ainsi constituées présentent encore des propriétés en termes de cohésion et ainsi de résistance à la fissuration améliorée en comparaison de conceptions plus usuelles. Les propriétés d'endurance des zones des bourrelets du pneumatique s'en trouvent donc encore renforcées.

Au sens de l'invention, un mélange caoutchouteux cohésif est un mélange caoutchouteux notamment robuste à la fissuration. La cohésion d'un mélange est ainsi évaluée par un test de fissuration en fatigue réalisé sur une éprouvette « PS » (pure shear). Il consiste à déterminer, après entaillage de l'éprouvette, la vitesse de propagation de fissure « Vp » (nm/cycle) en fonction du taux de restitution d'énergie « E » (J/m²). Le domaine expérimental couvert par la mesure est compris dans la plage -20°C et +150°C en température, avec une atmosphère d'air ou d'azote. La sollicitation de l'éprouvette est un déplacement dynamique imposé d'amplitude comprise entre 0.1mm et 10mm sous forme de sollicitation de type impulsionnel (signal « haversine » tangent) avec un temps de repos égal à la durée de l'impulsion ; la fréquence du signal est de l'ordre de 10Hz en moyenne.

La mesure comprend 3 parties :
- Une accommodation de l'éprouvette « PS », de 1000 cycles à 27% de déformation.
- une caractérisation énergétique pour déterminer la loi « E » = f (déformation). Le taux de restitution d'énergie « E » est égal à W0^{∗}h0, avec W0 = énergie fournie au matériau par cycle et par unité de volume et h0 = hauteur initiale de l'éprouvette. L'exploitation des acquisitions « force / déplacement » donne ainsi la relation entre « E » et l'amplitude de la sollicitation.
- La mesure de fissuration, après entaillage de l'éprouvette « PS ». Les informations recueillies conduisent à déterminer la vitesse de propagation de la fissure « Vp » en fonction du niveau de sollicitation imposé « E ».

Selon un mode de réalisation préféré de l'invention, le module d'élasticité sous tension à 10 % d'allongement des couches de calandrage de la couche d'armature de carcasse est compris entre 4 et 16 MPa et de préférence entre 8 et 12 MPa. Ces valeurs permettent notamment de définir le compromis souhaité entre les performances d'endurance du pneumatique et ses performances en termes de résistance au roulement.

Avantageusement selon l'invention, l'extrémité radialement intérieure de la deuxième couche de mélange polymérique est radialement comprise entre le point radialement le plus extérieur du cercle circonscrit à la tringle et le point radialement le plus intérieur du cercle circonscrit à la tringle. Ce positionnement est déterminé sur une coupe d'un pneumatique, dont l'écartement des bourrelets est le même que lorsque le pneumatique est monté sur la jante de montage préconisée par l'ETRTO, celui-ci étant donc ni monté ni gonflé.

Avantageusement encore selon l'invention, la distance entre l'extrémité du retournement de la couche d'armature de carcasse et le point radialement le plus intérieur du cercle circonscrit à la tringle est comprise entre 31 et 37 % de la distance entre le point axialement le plus extérieur de la partie principale de la couche d'armature carcasse et le point radialement le plus intérieur du cercle circonscrit à la tringle.

Selon un mode de réalisation avantageux de l'invention, dans tout plan méridien, dans chaque bourrelet, le pneumatique comporte une armature de contention entourant la tringle et un volume de mélange caoutchouteux directement au contact de la tringle.

Une telle armature de contention permet lors de l'utilisation du pneumatique de limiter les évolutions de forme de la tringle et ainsi de conserver des performances notamment en termes d'endurance satisfaisantes. En effet, le pneumatique selon l'invention dont la structure conduit à son allégement pourrait, dans certains cas d'utilisation ou types de roulage, conduire à une évolution géométrique dans la zone du bourrelet potentiellement nuisible aux performances en termes d'endurance du pneumatique. La présence d'une armature de contention telle que proposée permet de retarder voire de prévenir une telle évolution géométrique. Avantageusement encore selon l'invention, l'armature de contention est constituée d'une couche d'éléments de renforcement textiles de type polyamide aliphatique.

Avantageusement selon l'invention, les tringles sont des tringles paquets, c'est-à-dire des tringles formées d'un assemblage de fils gommés enroulés autour d'une forme, de préférence de forme hexagonale.

Selon un mode de réalisation de l'invention, notamment pour améliorer encore les performances en termes d'endurance du pneumatique, l'armature de carcasse est formée de câbles dont la structure est fortement pénétrée de mélanges polymériques. Il peut par exemple s'agir de câbles dont la construction permet d'augmenter leur pénétrabilité par les mélanges polymériques. Il peut encore s'agir de câbles dans lesquels des mélanges polymériques sont insérés lors de la fabrication des câbles eux-mêmes. Il s'agit alors par exemple de câbles à au moins deux couches, au moins une couche interne étant gainée d'une couche constituée d'une composition de caoutchouc non réticulable, réticulable ou réticulée, de préférence à base d'au moins un élastomère diénique.

Selon une variante de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres variantes de réalisation de l'invention, l'armature de sommet comporte encore au moins une couche d'éléments de renforcement circonférentiels.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

D'autres détails et caractéristiques avantageux de l'invention ressortiront ci-après de la description des exemples de réalisation de l'invention notamment en référence aux figures 1 à 2 qui représentent :
- figure 1, une vue méridienne d'un schéma d'un pneumatique selon un mode de réalisation de l'invention,
- figure 2, une représentation schématique agrandie de la zone du bourrelet du pneumatique de la figure 1.

Les figures ne sont pas représentées à l'échelle pour en simplifier la compréhension.

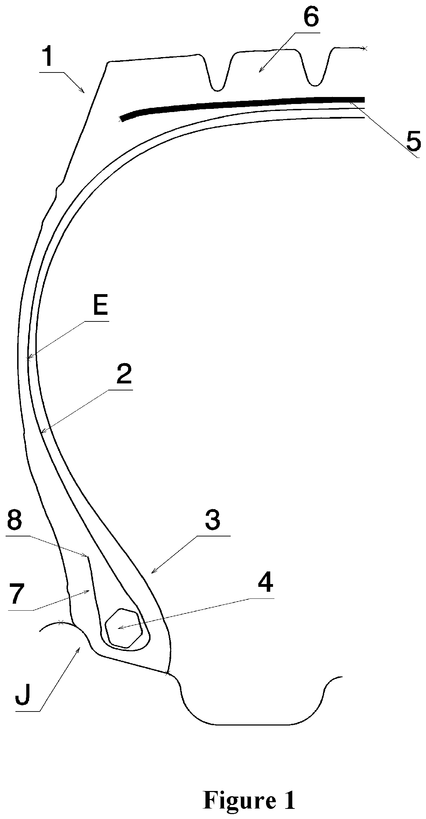

La figure 1 ne représente qu'une demi-vue d'un pneumatique qui se prolonge de manière symétrique par rapport au plan médian circonférentiel, ou plan équatorial, d'un pneumatique.

Sur la figure 1, le pneumatique 1 est de dimension 12 R 22.5. Ledit pneumatique 1 comprend une armature de carcasse radiale 2 ancrée dans deux bourrelets 3. L'armature de carcasse 2 est frettée au sommet du pneumatique par une armature de sommet 5, elle-même coiffée d'une bande de roulement 6.

L'armature de carcasse 2, formée d'une seule couche de câbles métalliques, est enroulée dans chacun des bourrelets 3 autour d'une tringle 4 et forme dans chacun des bourrelets 3 un retournement 7 de la couche d'armature de carcasse présentant une extrémité 8.

L'armature de carcasse 2 est constituée d'éléments de renforcements entre deux couches de calandrage dont le module d'élasticité sous tension à 10 % d'allongement est égal à 9.8 MPa.

Les éléments de renforcements de l'armature de carcasse 2 sont des câbles 19.18 dont l'allongement à rupture est égal à 2.5 %.

Les câbles d'armature de carcasse du pneumatique 1 sont des câbles à couche de structure 1+6+12, non fretté, constitué d'un noyau central formé d'un fil, d'une couche intermédiaire formée de six fils et d'une couche externe formée de douze fils.

La figure 1 illustre le pneumatique monté sur sa jante nominale J ; le point E axialement le plus extérieur de la partie principale de la couche d'armature de carcasse 2 est ainsi déterminé le pneumatique étant gonflé à sa pression nominale, par exemple par tomographie.

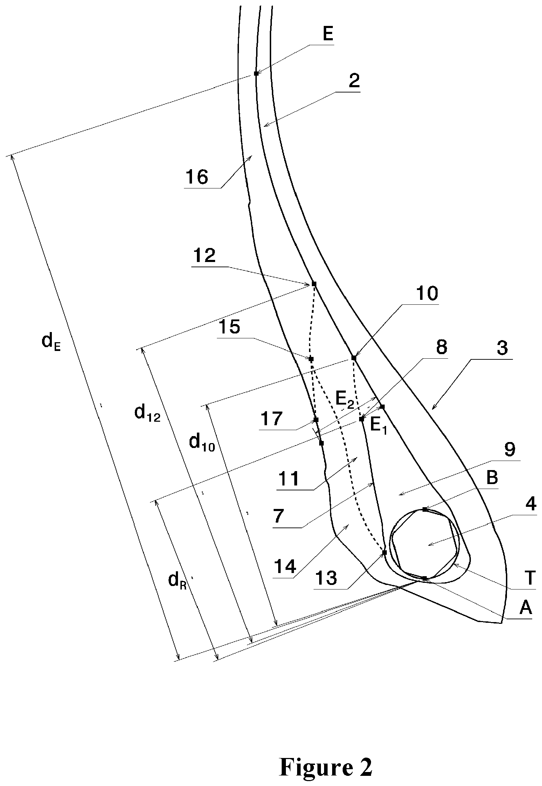

La figure 2 illustre de manière agrandie une représentation schématique en coupe d'un bourrelet 3 du pneumatique dans lequel on retrouve une partie de la couche d'armature de carcasse 2 enroulée autour d'une tringle 4 pour former un retournement 7 avec une extrémité 8.

Sur cette figure 2, est matérialisé le cercle T circonscrit à la tringle 4 et apparaît le point A radialement le plus intérieur dudit cercle T. Ce point A est défini sur une coupe radiale du pneumatique, dont l'écartement des bourrelets est le même que lorsque le pneumatique est monté sur la jante de montage préconisée par l'ETRTO, celui-ci n'étant pas monté sur une jante.

On détermine également le point B radialement le plus extérieur du cercle T.

La distance d_{E} entre le point E et le point A est égale à 128 mm.

La distance d_{R} entre le point 8 et le point A est égale à 44 mm.

Le ratio de la distance d_{R} sur la distance d_{E} est égal à 34 % et donc compris entre 25 et 40%.

Le retournement 7 de la couche d'armature de carcasse est séparé de la partie principale de la couche d'armature de carcasse 2 par une première couche de mélange polymérique 9, présentant une extrémité radialement extérieure 10 à une distance d₁₀ du point A égale à 105 mm. La première couche de mélange polymérique 9 présente un module d'élasticité sous tension à 10 % d'allongement égal à 5 MPa et donc inférieur au module d'élasticité sous tension à 10 % d'allongement des couches de calandrage de l'armature de carcasse 2.

Axialement à l'extérieur du retournement 7 de la couche d'armature de carcasse est représentée la deuxième couche de mélange polymérique 11 dont l'extrémité radialement extérieure 12 est radialement à l'extérieure de l'extrémité 8 du retournement 7 de la couche d'armature de carcasse à une distance d₁₂ du point A égale à 112 mm. L'extrémité radialement intérieure 13 de la deuxième couche de mélange polymérique 11 est radialement compris entre les points A et B, respectivement radialement le plus intérieur et radialement le plus extérieur du cercle circonscrit à la tringle.

La deuxième couche de mélange polymérique 11 présente un module d'élasticité sous tension à 10 % d'allongement égal à 5 MPa et donc inférieur au module d'élasticité sous tension à 10 % d'allongement des couches de calandrage de l'armature de carcasse 2.

Au contact de la deuxième couche de mélange polymérique 11 et radialement sous la tringle, on trouve la troisième couche de mélange polymérique 14, dont l'extrémité axialement la plus extérieure 15 est radialement à l'intérieur de l'extrémité 12 de la deuxième couche de mélange polymérique 11.

La troisième couche de mélange polymérique 14 présente un module d'élasticité sous tension à 10 % d'allongement égal à 7.1 MPa.

Axialement au contact de la deuxième couche de mélange polymérique 11 et de la troisième couche de mélange polymérique 14, se trouve la quatrième couche de mélange polymérique 16. L'extrémité radialement intérieure 17 de la quatrième couche de mélange polymérique 16 est radialement intérieure à l'extrémité 15 de la troisième couche de mélange polymérique 14.

La quatrième couche de mélange polymérique 16 présente un module d'élasticité sous tension à 10 % d'allongement égal à 3.1 MPa.

La première couche de mélange polymérique 9 présente une épaisseur E₁, mesurée selon la direction normale aux éléments de renforcement de la partie principale de la couche d'armature de carcasse et passant par l'extrémité du retournement de la couche d'armature de carcasse égale à 7.5 mm.

La distance E₂ entre les éléments de renforcements de la partie principale de la couche d'armature de carcasse et la surface extérieure du pneumatique mesurée selon la direction de mesure de l'épaisseur E₁ de la première couche de mélange polymérique passant par l'extrémité du retournement de la couche d'armature de carcasse est égale à 20 mm.

Le ratio de l'épaisseur E₁ de la première couche 9 de mélange polymérique sur la distance E₂, mesurée entre les éléments de renforcements de la partie principale de la couche d'armature de carcasse et la surface extérieure du pneumatique, est égale à 38 % et donc compris entre 30 et 60%.

Le rapport de la distance E₂, mesurée entre les éléments de renforcements de la partie principale de la couche d'armature de carcasse et la surface extérieure du pneumatique, sur la distance d_{R} entre l'extrémité du retournement de la couche d'armature de carcasse et le point radialement le plus intérieur du cercle circonscrit à la tringle est égal à 0.45 et donc inférieur à 0.5.

Des essais ont été réalisés avec des pneumatiques I réalisés selon l'invention conformément à la représentation des figures 1 et 2 et d'autres avec des pneumatiques R₁, R₂, R₃ dits de référence.

Les différents mélanges utilisés pour réalisés les première et deuxième couches 9 et 11 sont listés ci-après.

| | Mélange 1 | Mélange 2 |
|---|---|---|
| NR | 100 | 100 |
| Noir N330 | 40 | |
| Silice 165G | | 45 |
| Antioxydant | 1.30 | 1.7 |
| Acide stéarique | 0.5 | 1 |
| Oxyde de zinc | 4 | 4.5 |
| soufre | 3.12 | 1.9 |
| Accélérateur CBS | 0.60 | 1.9 |
| Silane sur noir | | 9 |
| PEG4000 | | 1 |
| MA₁₀(MPa) | 3.7 | 5 |
| P60 | 12.5 | 12.5 |
| tan(δ)ₘₐₓ 80°C | 0.080 | 0.080 |

Le facteur de perte tan(δ) est une propriété dynamique de la couche de mélange caoutchouteux. Il est mesuré sur un viscoanalyseur (Metravib VA4000), selon la norme ASTM D 5992-96. On enregistre la réponse d'un échantillon de composition vulcanisée (éprouvette cylindrique de 2 mm d'épaisseur et de 78 mm² de section), soumis à une sollicitation sinusoïdale en cisaillement simple alterné, à la fréquence de 10Hz, à une température de 80°C. On effectue un balayage en amplitude de déformation de 0,1 à 50% (cycle aller), puis de 50% à 1% (cycle retour). Les résultats exploités sont le module complexe de cisaillement dynamique (G*) et le facteur de perte tan(δ) mesuré sur le cycle retour. Pour le cycle retour, on indique la valeur maximale de tan(δ) observée, notée tan(δ)ₘₐₓ.

La résistance au roulement est la résistance qui apparaît lorsque le pneumatique roule. Elle est représentée par les pertes hystérétiques liées à la déformation du pneumatique durant une révolution. La valeur de tan(δ) à 80 °C correspond à un indicateur de la résistance au roulement du pneumatique en roulage.

Il est encore possible d'estimer la résistance au roulement par la mesure des pertes d'énergie par rebond des échantillons à énergie imposée à des températures de 60 °C et exprimées en pourcentage.

Les pneumatiques I selon l'invention sont réalisés avec des première et deuxième couches réalisées avec le mélange 2 conformément à l'invention.

Les pneumatiques de référence R₁ diffèrent des pneumatiques selon l'invention par la présence de raidisseurs et une zone du bourrelet plus usuelle avec notamment une épaisseur du bourrelet plus importante au niveau de l'extrémité du retournement de la couche d'armature de carcasse et des première et deuxième couches réalisées avec le mélange 1.

Les pneumatiques de référence R₂ diffèrent des pneumatiques selon l'invention uniquement par la présence de raidisseurs et une zone du bourrelet plus usuelle avec notamment une épaisseur du bourrelet plus importante au niveau de l'extrémité du retournement de la couche d'armature de carcasse, les première et deuxième couches étant réalisées avec le mélange 2.

Les pneumatiques R3 diffèrent des pneumatiques selon l'invention uniquement par des première et deuxième couches réalisées avec le mélange 1.

Des essais d'endurance ont été réalisés en faisant rouler deux pneus rabotés l'un sur l'autre avec une pression régulée de 8b, avec un gonflage à l'azote et une charge de 6786 daN à une vitesse de 30km/h et à une température ambiante de 15°C.

Les essais ont été réalisés pour les pneumatiques selon l'invention avec des conditions identiques à celles appliquées aux pneumatiques de référence.

Les essais réalisés conduisent pour les pneumatiques de référence R à des performances établissant la base 100. Les tests sont arrêtés lors de l'apparition d'une dégradation de la zone basse du pneumatique.

Les résultats des mesures sont présentés dans le tableau suivant. Ils sont exprimés en distance relative, une valeur de 100 étant attribuée au pneumatique R₁.

| Pneumatique R₁ | Pneumatique R₂ | Pneumatique R₃ | Pneumatique I |
|---|---|---|---|
| 100 | 90 | 70 | 110 |

Par ailleurs, des mesures de résistance au roulement ont été réalisées.

Les résultats des mesures sont présentés dans le tableau suivant ; elles sont exprimées en Kg/t, une valeur de 100 étant attribuée au pneumatique R₁.

| Pneumatique R₁ | Pneumatique R₂ | Pneumatique R₃ | Pneumatique I |
|---|---|---|---|
| 100 | 98 | 99 | 97 |

## Revendications

1. Pneumatique (1), destiné à être monté sur une jante creuse (J) de type « 15 ° drop centre », comprenant une armature de carcasse radiale (2), constituée d'une unique couche d'armature de carcasse formée d'éléments de renforcement insérés entre deux couches de calandrage de mélange polymérique, ledit pneumatique (1) comprenant une armature de sommet (5), elle-même coiffée radialement d'une bande de roulement (6), ladite bande de roulement étant réunie à deux bourrelets (3) par l'intermédiaire de deux flancs, la couche d'éléments de renforcement de l'armature de carcasse (2) étant ancrée dans chacun des bourrelets (3) par retournement autour d'une tringle (4) pour former une partie principale de la couche d'armature de carcasse s'étendant d'une tringle (4) à l'autre et un retournement (7) de la couche d'armature de carcasse dans chacun des bourrelets (3), ledit retournement (7) de la couche d'armature de carcasse étant séparé de la partie principale de la couche d'armature de carcasse (2) par une première couche de mélange polymérique (9) s'étendant radialement depuis la tringle (4) jusqu'au moins l'extrémité (8) du retournement (7) de la couche d'armature de carcasse et ledit retournement (7) de la couche d'armature de carcasse étant axialement vers l'extérieur au contact d'une deuxième couche de mélange polymérique (11), elle-même au moins au contact d'une troisième couche de mélange polymérique (14) formant la surface extérieur du pneumatique dans la zone du bourrelet (3), ladite troisième couche de mélange polymérique (14) étant destinée notamment à venir au contact de la jante (J), ladite troisième couche de mélange polymérique (14) étant radialement vers l'extérieur au contact d'une quatrième couche (16) formant la surface extérieure d'un flanc, où, dans une coupe méridienne dudit pneumatique,
- l'extrémité radialement extérieure (10) de la première couche de mélange polymérique (9) est radialement extérieure à l'extrémité (8) du retournement (7) de la couche d'armature de carcasse,
- l'extrémité radialement extérieure (12) de la deuxième couche de mélange polymérique (11) est radialement extérieure à l'extrémité (8) du retournement (7) de la couche d'armature de carcasse,
- ladite première couche de mélange polymérique (9) présente une épaisseur E₁, mesurée selon la direction normale aux éléments de renforcement de la partie principale de la couche d'armature de carcasse (2) et passant par l'extrémité (8) du retournement (7) de la couche d'armature de carcasse comprise entre 30 et 60% de la distance E₂ entre les éléments de renforcements de la partie principale de la couche d'armature de carcasse (2) et la surface extérieure du pneumatique mesurée selon la direction de mesure de l'épaisseur E₁ de la première couche de mélange polymérique (9) passant par l'extrémité (8) du retournement (7) de la couche d'armature de carcasse,
- le rapport de la distance E₁ entre les éléments de renforcements de la partie principale de la couche d'armature de carcasse (2) et la surface extérieure du pneumatique mesurée selon ladite direction de mesure de l'épaisseur E₁ de la première couche de mélange polymérique (9) passant par l'extrémité (8) du retournement (7) de la couche d'armature de carcasse sur la distance d_{R} entre l'extrémité (8) du retournement (7) de la couche d'armature de carcasse et le point (A) radialement le plus intérieur du cercle (T) circonscrit à la tringle (4) est inférieur à 0.5,
- le retournement (7) de la couche d'armature de carcasse et la partie principale de la couche d'armature de carcasse (2) sont les seules couches d'éléments de renforcement dont l'allongement à rupture est inférieur à 6 % présentes dans une zone du flanc constituant au moins 90% de la surface comprise radialement entre l'extrémité (8) du retournement (7) de la couche d'armature de carcasse et le point (B) radialement le plus à l'extérieur de la tringle (4) **caractérisé en ce que**, dans une coupe méridienne dudit pneumatique,
- la distance d entre l'extrémité (8) du retournement (7) de la couche d'armature de carcasse R et le point (A) radialement le plus intérieur du cercle (T) circonscrit à la tringle (4) est comprise entre 25 et 40% de la distance d entre le point (E) axialement le plus extérieur de E la partie principale de la couche d'armature de carcasse (2) et le point (A) radialement le plus intérieur du cercle (T) circonscrit à la tringle (4),
- la première et la deuxième couche de mélange polymérique (9, 11) comportent une charge renforçante constituée par au moins une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse,
- les modules d'élasticité sous tension à 10 % d'allongement de la première et de la deuxième couche de mélange polymérique (9, 11) sont inférieurs au module d'élasticité sous tension à 10 % d'allongement du calandrage de la couche d'armature de carcasse (2) et supérieurs ou égaux à 30% du module d'élasticité sous tension à 10 % d'allongement du calandrage de la couche d'armature de carcasse (2), où les mesures de module sont effectuées en traction selon la norme AFNOR-NFT-46002 de septembre 1988 et en conditions normales de température et d'hygrométrie selon la norme AFNOR-NFT-40101 de décembre 1979.

2. Pneumatique (1) selon la revendication 1, **caractérisé en ce que** lesdites première et deuxième couches de mélange polymérique (9, 11) sont des mélanges élastomériques à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :
a) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse, de surface spécifique BET comprise entre 30 et 260 m²/g employée à un taux compris entre 20 et 80 pce, et de préférence entre 30 et 50 pce, où la mesure de surface spécifique BET est effectuée selon la méthode de BRUNAUER, EMMET et TELLER décrite dans "The Journal of the American Chemical Society", vol. 60, page 309, février 1938, correspondant à la norme NFT 45007 de novembre 1987;
b) soit par un coupage d'une charge blanche décrite en (a) et de noir de carbone, dans lequel le taux global de charge est compris entre 20 et 80 pce, et de préférence entre 40 et 60 pce, le taux de silice sur le taux global de charge étant supérieur à 80% et de préférence supérieur à 90 %.

3. Pneumatique (1) selon l'une des revendications 1 ou 2, **caractérisé en ce que** le module d'élasticité sous tension à 10 % d'allongement des couches de calandrage de la couche d'armature de carcasse (2) est compris entre 4 et 16 MPa et de préférence entre 8 et 12 MPa.

4. Pneumatique (1) selon l'une des revendications précédentes, **caractérisé en ce que** l'extrémité radialement intérieure (13) de la deuxième couche de mélange polymérique (11) est radialement comprise entre le point (B) radialement le plus extérieur du cercle (T) circonscrit à la tringle (4) et le point (A) radialement le plus intérieur du cercle (T) circonscrit à la tringle (4).

5. Pneumatique (1) selon l'une des revendications précédentes, **caractérisé en ce que** la distance d_{R} entre l'extrémité (8) du retournement (7) de la couche d'armature de carcasse et le point (A) radialement le plus intérieur du cercle (T) circonscrit à la tringle (4) est comprise entre 31 et 37 % de la distance d_{E} entre le point (E) axialement le plus extérieur de la partie principale de la couche d'armature de carcasse (2) et le point (A) radialement le plus intérieur du cercle (T) circonscrit à la tringle (4).

6. Pneumatique (1) selon l'une des revendications précédentes, **caractérisé en ce que,** dans tout plan méridien, dans chaque bourrelet (3), le pneumatique comporte une armature de contention entourant la tringle (4) et un volume de mélange caoutchouteux directement au contact de la tringle (4).

7. Pneumatique (1) selon l'une des revendications précédentes, **caractérisé en ce que** les tringles (4) sont des tringles paquets, de préférence de forme hexagonale.

## Patentansprüche

1. Reifen (1), welcher dazu bestimmt ist, auf einer hohlen Felge (J) vom Typ "15°-Steilschulterfelge" montiert zu werden, und welcher eine radiale Karkassenbewehrung (2) umfasst, die aus einer einzigen Karkassenbewehrungsschicht besteht, die von Verstärkungselementen gebildet wird, die zwischen zwei Kalandrierschichten aus Polymermischung eingefügt sind, wobei der Reifen (1) eine Scheitelbewehrung (5) umfasst, die ihrerseits radial von einem Laufstreifen (6) bedeckt ist, wobei der Laufstreifen über zwei Seitenwände mit zwei Wülsten (3) verbunden ist, wobei die Schicht von Verstärkungselementen der Karkassenbewehrung (2) in jedem der Wülste (3) durch Umschlag um einen Wulstkern (4) verankert ist, um einen Hauptteil der Karkassenbewehrungsschicht , der sich von einem Wulstkern (4) zum anderen erstreckt, und einen umgeschlagenen Teil (7) der Karkassenbewehrungsschicht in jedem der Wülste (3) zu bilden, wobei der umgeschlagene Teil (7) der Karkassenbewehrungsschicht vom Hauptteil der Karkassenbewehrungsschicht (2) durch eine erste Schicht aus Polymermischung (9) getrennt ist, die sich radial vom Wulstkern (4) bis wenigstens zum Ende (8) des umgeschlagenen Teils (7) der Karkassenbewehrungsschicht erstreckt, und wobei sich der umgeschlagene Teil (7) der Karkassenbewehrungsschicht axial außen mit einer zweiten Schicht aus Polymermischung (11) in Kontakt befindet, die sich ihrerseits wenigstens mit einer dritten Schicht aus Polymermischung (14) in Kontakt befindet, welche die Außenfläche des Reifens im Bereich des Wulstes (3) bildet, wobei die dritte Schicht aus Polymermischung (14) insbesondere dazu bestimmt ist, mit der Felge (J) in Kontakt zu kommen, wobei sich die dritte Schicht aus Polymermischung (14) radial außen mit einer vierten Schicht (16) in Kontakt befindet, welche die Außenfläche einer Seitenwand bildet, wobei in einem Meridianschnitt des Reifens
- das radial äußere Ende (10) der ersten Schicht aus Polymermischung (9) radial außerhalb des Endes (8) des umgeschlagenen Teils (7) der Karkassenbewehrungsschicht liegt,
- das radial äußere Ende (12) der zweiten Schicht aus Polymermischung (11) radial außerhalb des Endes (8) des umgeschlagenen Teils (7) der Karkassenbewehrungsschicht liegt,
- die erste Schicht aus Polymermischung (9) eine Dicke E₁ aufweist, gemessen in der Richtung, die zu den Verstärkungselementen des Hauptteils der Karkassenbewehrungsschicht (2) senkrecht ist und durch das Ende (8) des umgeschlagenen Teils (7) der Karkassenbewehrungsschicht verläuft, die zwischen 30 und 60 % des Abstands E₂ zwischen den Verstärkungselementen des Hauptteils der Karkassenbewehrungsschicht (2) und der Außenfläche des Reifens beträgt, gemessen in der Messrichtung der Dicke E₁ der ersten Schicht aus Polymermischung (9), die durch das Ende (8) des umgeschlagenen Teils (7) der Karkassenbewehrungsschicht verläuft,
- das Verhältnis des Abstands E₂ zwischen den Verstärkungselementen des Hauptteils der Karkassenbewehrungsschicht (2) und der Außenfläche des Reifens, gemessen in der Messrichtung der Dicke E₁ der ersten Schicht aus Polymermischung (9), die durch das Ende (8) des umgeschlagenen Teils (7) der Karkassenbewehrungsschicht verläuft, zum Abstand d_{R} zwischen dem Ende (8) des umgeschlagenen Teils (7) der Karkassenbewehrungsschicht und dem radial innersten Punkt (A) des dem Wulstkern (4) umbeschriebenen Kreises (T) kleiner als 0,5 ist,
- der umgeschlagene Teil (7) der Karkassenbewehrungsschicht und der Hauptteil der Karkassenbewehrungsschicht (2) die einzigen Schichten von Verstärkungselementen, deren Bruchdehnung kleiner als 6 % ist, sind, die in einem Bereich der Seitenwand vorhanden sind, der wenigstens 90 % der Fläche bildet, die radial zwischen dem Ende (8) des umgeschlagenen Teils (7) der Karkassenbewehrungsschicht und dem radial äußersten Punkt (B) des Wulstkerns (4) liegt,
**dadurch gekennzeichnet, dass** in einem Meridianschnitt des Reifens
- der Abstand d_{R} zwischen dem Ende (8) des umgeschlagenen Teils (7) der Karkassenbewehrungsschicht und dem radial innersten Punkt (A) des dem Wulstkern (4) umbeschriebenen Kreises (T) zwischen 25 und 40 % des Abstands d_{E} zwischen dem axial äußersten Punkt (E) des Hauptteils der Karkassenbewehrungsschicht (2) und dem radial innersten Punkt (A) des dem Wulstkern (4) umbeschriebenen Kreises (T) beträgt,
- die erste und die zweite Schicht aus Polymermischung (9, 11) einen verstärkenden Füllstoff aufweisen, der aus wenigstens einem hellen Füllstoff vom Typ Kieselsäure und/oder Aluminiumoxid besteht, der Oberflächengruppen SiOH und/oder AlOH aufweist und aus der Gruppe ausgewählt ist, die von den gefällten oder pyrogenen Kieselsäuren, den Aluminiumoxiden oder den Aluminiumsilikaten oder auch den während oder nach der Synthese modifizierten Rußen gebildet wird,
- die Elastizitätsmodule unter Spannung bei 10 % Dehnung der ersten und der zweiten Schicht aus Polymermischung (9, 11) kleiner als der Elastizitätsmodul unter Spannung bei 10 % Dehnung der Kalandrierung der Karkassenbewehrungsschicht (2) und größer oder gleich 30 % des Elastizitätsmoduls unter Spannung bei 10 % Dehnung der Kalandrierung der Karkassenbewehrungsschicht (2) sind, wobei die Messungen der Module im Zugversuch gemäß der Norm AFNOR-NFT-46002 vom September 1988 und unter Normbedingungen für Temperatur und Feuchtigkeit gemäß der Norm AFNOR-NFT-40101 vom Dezember 1979 durchgeführt werden.

2. Reifen (1) nach Anspruch 1, **dadurch gekennzeichnet, dass** die erste und die zweite Schicht aus Polymermischung (9, 11) Elastomermischungen auf der Basis von Naturkautschuk oder von synthetischem Polyisopren mit einer Mehrheit von cis-1,4-Verkettungen und eventuell von wenigstens einem weiteren Dienelastomer sind, wobei der Naturkautschuk oder das synthetische Polyisopren im Falle eines Verschnitts in einem Mehrheitsanteil in Bezug auf den Anteil des anderen oder der anderen verwendeten Dienelastomere vorhanden ist, und von einem verstärkenden Füllstoff, welcher besteht:
a) entweder aus einem hellen Füllstoff vom Typ Kieselsäure und/oder Aluminiumoxid, der Oberflächengruppen SiOH und/oder AlOH aufweist und aus der Gruppe ausgewählt ist, die von den gefällten oder pyrogenen Kieselsäuren, den Aluminiumoxiden oder den Aluminiumsilikaten oder auch den während oder nach der Synthese modifizierten Rußen mit einer spezifischen BET-Oberfläche zwischen 30 und 260 m²/g gebildet wird, verwendet in einem Anteil zwischen 20 und 80 pce und vorzugsweise zwischen 30 und 50 pce, wobei die Messung der spezifischen BET-Oberfläche gemäß dem Verfahren von BRUNAUER, EMMET und TELLER durchgeführt wird, das in "The Journal of the American Chemical Society", Bd. 60, Seite 309, Februar 1938, beschrieben ist, das der Norm NFT 45007 vom November 1987 entspricht;
b) oder aus einem Verschnitt eines in (a) beschriebenen hellen Füllstoffs und von Ruß, wobei der Gesamtanteil von Füllstoff zwischen 20 und 80 pce und vorzugsweise zwischen 40 und 60 pce liegt, wobei der Anteil von Kieselsäure am Gesamtanteil von Füllstoff größer als 80 % und vorzugsweise größer als 90 % ist.

3. Reifen (1) nach einem der Ansprüche 1 oder 2, **dadurch gekennzeichnet, dass** der Elastizitätsmodul unter Spannung bei 10 % Dehnung der Kalandrierschichten der Karkassenbewehrungsschicht (2) zwischen 4 und 16 MPa und vorzugsweise zwischen 8 und 12 MPa liegt.

4. Reifen (1) nach einem der vorhergehenden Ansprüche, **dadurch gekennzeichnet, dass** das radial innere Ende (13) der zweiten Schicht aus Polymermischung (11) radial zwischen dem radial äußersten Punkt (B) des dem Wulstkern (4) umbeschriebenen Kreises (T) und dem radial innersten Punkt (A) des dem Wulstkern (4) umbeschriebenen Kreises (T) liegt.

5. Reifen (1) nach einem der vorhergehenden Ansprüche, **dadurch gekennzeichnet, dass** der Abstand d_{R} zwischen dem Ende (8) des umgeschlagenen Teils (7) der Karkassenbewehrungsschicht und dem radial innersten Punkt (A) des dem Wulstkern (4) umbeschriebenen Kreises (T) zwischen 31 und 37 % des Abstands d_{E} zwischen dem axial äußersten Punkt (E) des Hauptteils der Karkassenbewehrungsschicht (2) und dem radial innersten Punkt (A) des dem Wulstkern (4) umbeschriebenen Kreises (T) beträgt.

6. Reifen (1) nach einem der vorhergehenden Ansprüche, **dadurch gekennzeichnet, dass** in jeder Meridianebene, in jedem Wulst (3), der Reifen eine Fixierungsbewehrung, die den Wulstkern (4) umgibt, und ein Volumen von Kautschukmischung, das sich mit dem Wulstkern (4) direkt in Kontakt befindet, aufweist.

7. Reifen (1) nach einem der vorhergehenden Ansprüche, **dadurch gekennzeichnet, dass** die Wulstkerne (4) Wulstkernpakete sind, vorzugsweise von sechseckiger Form.

## Claims

1. Tyre (1) intended to be fitted on a hollow rim (J) of the "15° drop centre" type, comprising a radial carcass reinforcement (2), made up of a single carcass reinforcement layer formed by reinforcing elements inserted between two calendering layers of polymer compound, said tyre (1) comprising a crown reinforcement (5), itself capped radially by a tread (6), said tread being connected to two beads (3) via two sidewalls, the layer of reinforcing elements of the carcass reinforcement (2) being anchored in each of the beads (3) by a turn-up around a bead wire (4) in order to form a main part of the carcass reinforcement layer extending from one bead wire (4) to the other and a turn-up (7) of the carcass reinforcement layer in each of the beads (3), said turn-up (7) of the carcass reinforcement layer being separated from the main part of the carcass reinforcement layer (2) by a first layer of polymer compound (9) extending radially from the bead wire (4) to at least the end (8) of the turn-up (7) of the carcass reinforcement layer and said turn-up (7) of the carcass reinforcement layer being in contact, axially towards the outside, with a second layer of polymer compound (11), itself at least in contact with a third layer of polymer compound (14) forming the outer surface of the tyre in the bead (3) region, said third layer of polymer compound (14) being intended notably to come into contact with the rim (J), said third layer of polymer compound (14) being in contact, radially towards the outside, with a fourth layer (16) forming the outer surface of a sidewall, wherein, in a meridian section of said tyre,
- the radially outer end (10) of the first layer of polymer compound (9) is radially outside the end (8) of the turn-up (7) of the carcass reinforcement layer,
- the radially outer end (12) of the second layer of polymer compound (11) is radially outside the end (8) of the turn-up (7) of the carcass reinforcement layer,
- said first layer of polymer compound (9) has a thickness E₁, measured in the direction normal to the reinforcing elements of the main part of the carcass reinforcement layer (2)and passing through the end (8) of the turn-up (7) of the carcass reinforcement layer of between 30 and 60% of the distance E₂ between the reinforcing elements of the main part of the carcass reinforcement layer (2) and the outer surface of the tyre measured in the direction of measuring the thickness E₁ of the first layer of polymer compound (9) passing through the end (8) of the turn-up (7) of the carcass reinforcement layer,
- the ratio of the distance E₂ between the reinforcing elements of the main part of the carcass reinforcement layer (2) and the outer surface of the tyre measured in said direction of measuring the thickness E₁ of the first layer of polymer compound (9) passing through the end (8) of the turn-up (7) of the carcass reinforcement layer to the distance d_{R} between the end (8) of the turn-up (7) of the carcass reinforcement layer and the radially innermost point (A) of the circle (T) circumscribed on the bead wire (4) is less than 0.5,
- the turn-up (7) of the carcass reinforcement layer and the main part of the carcass reinforcement layer (2) are the only layers of reinforcing elements, of which the elongation at break is less than 6%, that are present in a sidewall region making up at least 90% of the surface area comprised radially between the end (8) of the turn-up (7) of the carcass reinforcement layer and the radially outermost point (B) of the bead wire (4), **characterized in that,** in a meridian section of said tyre,
- the distance d_{R} between the end (8) of the turn-up (7) of the carcass reinforcement layer and the radially innermost point (A) of the circle (T) circumscribed on the bead wire (4) is between 25 and 40% of the distance d_{E} between the axially outermost point (E) of the main part of the carcass reinforcement layer (2) and the radially innermost point (A) of the circle (T) circumscribed on the bead wire (4),
- the first and the second layer of polymer compound (9, 11) have a reinforcing filler consisting of at least one white filler of the silica and/or alumina type having SiOH and/or AlOH surface functions, selected from the group consisting of precipitated or fumed silicas, aluminas or aluminosilicates, or carbon blacks modified during or after synthesis,
- the tensile elastic moduli at 10% elongation of the first and the second layer of polymer compound (9, 11) are less than the tensile elastic modulus at 10% elongation of the calendering of the carcass reinforcement layer (2) and greater than or equal to 30% of the tensile elastic modulus at 10% elongation of the calendering of the carcass reinforcement layer (2), where the modulus measurements being taken under tension in accordance with standard AFNOR-NFT-46002 of September 1988 and with normal temperature and relative humidity conditions in accordance with standard AFNOR-NFT-40101 of December 1979.

2. Tyre (1) according to Claim 1, **characterized in that** said first and second layers of polymer compound (9, 11) are elastomeric compounds based on natural rubber or on synthetic polyisoprene with a majority of cis-1,4 chains and possibly on at least one other diene elastomer, the natural rubber or the synthetic polyisoprene in the case of a blend being present at a predominant content compared with the content of the other diene elastomer(s) used, and on a reinforcing filler consisting:
a) either of a white filler of the silica and/or alumina type having SiOH and/or AlOH surface functions, selected from the group consisting of precipitated or fumed silicas, aluminas or aluminosilicates, or carbon blacks modified during or after synthesis, with a BET specific surface area in the range between 30 and 260 m²/g, used in a content between 20 and 80 phr, and preferably between 30 and 50 phr, where the BET specific surface area measurement is performed in accordance with the Brunauer, Emmet and Teller method described in "The Journal of the American Chemical Society", vol. 60, page 309, February 1938, corresponding to standard NFT45007 of November 1987,
b) or of a blend of a white filler described in (a) and carbon black, in which the overall content of filler is between 20 and 80 phr, and preferably between 40 and 60 phr, the content of silica with respect to the overall content of filler being greater than 80% and preferably greater than 90%.

3. Tyre (1) according to either of Claims 1 and 2, **characterized in that** the tensile elastic modulus at 10% elongation of the calendering layers of the carcass reinforcement layer (2) is between 4 and 16 MPa and preferably between 8 and 12 MPa.

4. Tyre (1) according to one of the preceding claims, **characterized in that** the radially inner end (13) of the second layer of polymer compound (11) is radially comprised between the radially outermost point (B) of the circle (T) circumscribed on the bead wire (4) and the radially innermost point (A) of the circle (T) circumscribed on the bead wire (4).

5. Tyre (1) according to one of the preceding claims, **characterized in that** the distance d_{R} between the end (8) of the turn-up (7) of the carcass reinforcement layer and the radially innermost point (A) of the circle (T) circumscribed on the bead wire (4) is between 31 and 37% of the distance d_{E} between the axially outermost point (E) of the main part of the carcass reinforcement layer (2) and the radially innermost point (A) of the circle (T) circumscribed on the bead wire (4).

6. Tyre (1) according to one of the preceding claims, **characterized in that,** in every meridian plane, in each bead (3), the tyre has a retention reinforcement surrounding the bead wire (4) and a volume of rubber compound in direct contact with the bead wire (4).

7. Tyre (1) according to one of the preceding claims, **characterized in that** the bead wires (4) are bead-wire bundles, preferably of hexagonal shape.
